# EUROPEAN PATENT SPECIFICATION

(11) **EP 3 905 465 B1**
(45) Date of publication and mention of the grant of the patent: **06.12.2023**
(21) Application number: 19936621.2
(22) Date of filing: 11.07.2019
(51) Int. Cl.: H02J 3/38, H01L 31/02, H02S 40/30

(54) **CONVERTER, METHOD AND SYSTEM APPLIED TO PHOTOVOLTAIC POWER GENERATION SYSTEM**
WANDLER, VERFAHREN UND SYSTEM FÜR EIN FOTOVOLTAISCHES ENERGIEERZEUGUNGSSYSTEM
CONVERTISSEUR, PROCÉDÉ ET SYSTÈME APPLIQUÉS À UN SYSTÈME DE PRODUCTION D'ÉNERGIE PHOTOVOLTAÏQUE

(43) Date of publication of application: 03.11.2021
(73) Proprietor: Huawei Digital Power Technologies Co., Ltd., Futian District, Shenzhen, Guangdong 518043 (CN)
(72) Inventor: GU, Guilei, Shenzhen, Guangdong 518129 (CN); YAO, Xiaofeng, Shenzhen, Guangdong 518129 (CN)
(74) Representative: Gill Jennings & Every LLP
(86) International application number: PCT/CN2019/095545
(87) International publication number: WO 2021/003728

(56) References cited:
- EP-A1- 3 382 763
- CN-A- 105 723 614
- CN-A- 106 602 504
- CN-A- 107 078 691
- CN-A- 109 245 711
- US-A1- 2011 172 842
- US-A1- 2012 163 048
- US-A1- 2015 101 651

## Description

### TECHNICAL FIELD

This application relates to the field of photovoltaic power generation technologies, and in particular, to a converter, a method, and a system applied to a photovoltaic power generation system.

### BACKGROUND

Photovoltaic power generation is a technology that uses a photovoltaic effect of a semiconductor interface to convert photon energy into electric energy. A photovoltaic power generation system usually includes a photovoltaic array, an inverter, alternating current distribution equipment, and the like. To obtain a relatively high output voltage or output current, the photovoltaic array usually includes a plurality of photovoltaic components connected in series and in parallel. However, differences in parameters of different photovoltaic components and differences in solar radiation conditions lead to energy loss. In addition, because the photovoltaic components are disposed outdoors, phenomena such as partial blocking, intermittent sheltering, and aging of the photovoltaic components also lead to energy loss, which in turn affects power generation of the photovoltaic power generation system and reduces power generation efficiency.

To improve the power generation efficiency of the photovoltaic power generation system, each photovoltaic component is connected to a converter with a separate MPPT (Maximum Power Point Tracking, maximum power point tracking) function to maximize the power generation efficiency of the photovoltaic power generation system. To reduce costs of the photovoltaic power generation system, the plurality of photovoltaic components are connected in series outside the converter, and then connected to an input end of the converter, thereby reducing a quantity of converters included in the photovoltaic power generation system. In this way, the costs of the photovoltaic power generation system are reduced.

However, in this solution, a total voltage obtained after the plurality of photovoltaic components are directly connected in series is relatively high. When the photovoltaic power generation system implements a fast shutdown function, the converter of the photovoltaic power generation system is shut down, and an output voltage of the converter is zero. However, the plurality of photovoltaic components connected in series cannot be disconnected, and a dangerous high voltage still exists in the photovoltaic array formed by the photovoltaic components connected in series, causing a potential danger to safety.

US 2015/101651 A1 discloses systems and methods for automatically or remotely rendering a solar array safe during an emergency or maintenance. A watchdog unit is disclosed for monitoring a signal from a central controller. If the signal is lost, interrupted, or becomes irregular, or if a shutdown signal is received, then the watchdog unit can shut down one or more solar modules. Shutting down a solar module can mean disconnecting it from a power bus of the solar array or lowering the solar module voltage to a safe level.

### SUMMARY

To resolve the foregoing technical problem in the prior art, this application provides a converter, a method, and a system applied to a photovoltaic power generation system, so that any two photovoltaic units connected in series can be disconnected when the photovoltaic power generation system is shut down. In this way, no dangerous high voltage exists in a photovoltaic array formed by the photovoltaic units, thereby improving safety of the photovoltaic power generation system.

According to a first aspect, this application provides a converter applied to a photovoltaic power generation system in accordance with appended claim 1.

In this application, an open-circuit voltage of each photovoltaic unit connected to the converter is less than 80 V Therefore, when the controller controls the switching transistor to be disconnected, a dangerous high voltage may not exist in a photovoltaic array formed by the photovoltaic units, thereby improving safety of the photovoltaic power generation system.

Further, the preset voltage value is usually relatively low, for example, may be 10 V The preset current value is also usually relatively low, for example, may be set to 10 mA. Therefore, no dangerous high voltage and high current exist at an output end of the converter, thereby improving safety of the photovoltaic power generation system.

With reference to the first aspect and any one of the foregoing possible implementations, in a fourth possible implementation, the controller is further configured to: when the startup instruction is received and the heartbeat instruction is received, determine that the converter needs to be switched to the normal operating mode. Therefore, the controller controls the power circuit to recover power conversion, or releases limitation on the output voltage of the power circuit, or releases limitation on the output current of the power circuit, so that the power circuit can operate normally.

With reference to the first aspect and any one of the foregoing possible implementations, in a fifth possible implementation, when the power circuit is a direct current-direct current conversion circuit, the direct current-direct current conversion circuit may be a boost circuit, a buck circuit, or a buck-boost circuit. A specific type of the power circuit may be determined based on an actual requirement.

With reference to the first aspect and any one of the foregoing possible implementations, in a sixth possible implementation, the converter further includes a communications unit. The communications unit is configured to: receive a control signal from an upper level, and forward the control signal to the controller. The control signal includes the heartbeat instruction, the startup instruction, and the shutdown instruction.

The communications unit can forward the control signal to the controller, so that the controller determines in time based on the control signal whether the current converter is in the normal operating mode or in the shutdown mode. Therefore, the controller can control operating statuses of the switching transistor and the power circuit in time.

With reference to the first aspect and any one of the foregoing possible implementations, in a seventh possible implementation, the converter further includes an auxiliary power supply. An input end of the converter is connected to the auxiliary power supply, such that when a photovoltaic unit of the at least two photovoltaic units is connected to the input end of the converter, the photovoltaic unit supplies power to the auxiliary power supply. The auxiliary power supply supplies power to the controller and the communications unit.

A specific photovoltaic unit connected to the converter supplies power to the auxiliary power supply, which is irrelevant to a connection status of the switching transistor inside the converter. Therefore, the auxiliary power supply can supply power to the controller and the communications unit when the at least two photovoltaic units are not connected in series by using the switching transistor.

With reference to the first aspect and any one of the foregoing possible implementations, in an eighth possible implementation, the switching transistor may be any one of the following: a transistor, an insulated gate bipolar transistor, and a metal oxide semiconductor field effect transistor. A specific type of the switching transistor may be determined based on an actual requirement.

According to a second aspect, this application further provides a method for controlling a converter in accordance with appended claim 7.

In this method, when a shutdown function is implemented in the photovoltaic power generation system, the switching transistor can be controlled to be disconnected, so that any two photovoltaic units connected in series are disconnected. Therefore, no dangerous high voltage exists in a photovoltaic array formed by the photovoltaic units, thereby ensuring safety of the converter and safety in a specific range surrounding the photovoltaic array. In this way, safety of the entire photovoltaic power generation system is improved.

In this method, when the startup instruction is received and the heartbeat instruction is received, the controller determines that the converter needs to switch to a normal operating mode at this time, and controls the switching transistor to be connected, so that the photovoltaic units are connected in series inside the converter by using the switching transistor.

According to a third aspect, this application further provides a photovoltaic power generation system in accordance with appended claim 8.

The photovoltaic power generation system includes any converter. The converter includes a controller and at least one switching transistor. An open-circuit voltage of each photovoltaic unit connected to the converter is less than 80 V Therefore, when the controller controls the switching transistor to be disconnected, a dangerous high voltage may not exist in the photovoltaic array formed by the photovoltaic units, thereby improving safety of the photovoltaic power generation system.

With reference to the third aspect, in a first possible implementation, when the power circuit is a direct current-direct current conversion circuit and there are a plurality of direct current-direct current conversion circuits, the plurality of direct current-direct current conversion circuits are connected in series to form a direct current-direct current conversion circuit string. The direct current-direct current conversion circuit string is connected to an input end of an inverter. The inverter is configured to: convert a direct current output by the direct current-direct current conversion circuit string into an alternating current, and then output the alternating current.

A quantity of direct current-direct current conversion circuits included in the direct current-direct current conversion circuit string may be determined based on an actual situation. Each converter in the photovoltaic power generation system provided in this application can still meet a standard fast shutdown requirement when an input end of the converter is connected to a plurality of photovoltaic units. Therefore, a quantity of converters included in the photovoltaic power generation system can be reduced, thereby effectively simplifying onsite wiring and reducing system costs.

With reference to the third aspect and any foregoing possible implementation, in a second possible implementation, there are a plurality of direct current-direct current conversion circuit strings. The plurality of direct current-direct current conversion circuit strings are connected in parallel to the input end of the inverter, or are separately connected to different input ports of the input end of the inverter.

A quantity of direct current-direct current conversion circuit strings connected to the input end of the inverter may be determined based on an actual situation. Each converter in the photovoltaic power generation system provided in this application can still meet a standard fast shutdown requirement when an input end of the converter is connected to a plurality of photovoltaic units. Therefore, a quantity of converters included in the photovoltaic power generation system can be reduced, thereby effectively simplifying onsite wiring and reducing system costs.

This application has at least the following advantages:

The converter provided in this application supports access of at least two photovoltaic units via a plurality of input ports. The converter includes the switching transistor. The input ports are arranged such that the at least two photovoltaic units, when connected to the input ports, are connected in series by using the switching transistor disposed inside the converter. For example, when the input end of the converter is connected to two photovoltaic units, the converter includes one switching transistor, and the two photovoltaic units are connected in series by using the switching transistor. A larger quantity of photovoltaic units need a larger quantity of switching transistors to implement connection in series. For example, when N photovoltaic units implement connection in series, N-1 switching transistors are correspondingly needed. The connection status of the switching transistor is controlled by the controller of the converter. When the controller of the converter receives the shutdown instruction or loses the heartbeat instruction within the preset time period, the controller controls all the switching transistors to be disconnected. Because the photovoltaic units are connected in series by using the switching transistors inside the converter, any two photovoltaic units connected in series can be disconnected. Therefore, no dangerous high voltage exists in the photovoltaic array formed by the photovoltaic units, thereby meeting a requirement for safety. In this way, safety of the entire photovoltaic power generation system is improved.

### BRIEF DESCRIPTION OF DRAWINGS

FIG. 1 is a schematic diagram of a photovoltaic power generation system according to this application;
FIG. 2 is a schematic diagram of a converter applied to a photovoltaic power generation system according to Embodiment 1 of this application;
FIG. 3 is a schematic diagram of another converter applied to a photovoltaic power generation system according to Embodiment 2 of this application;
FIG. 4 is a schematic diagram of still another converter applied to a photovoltaic power generation system according to Embodiment 3 of this application;
FIG. 5 is a schematic diagram of yet another converter applied to a photovoltaic power generation system according to Embodiment 3 of this application;
FIG. 6a is a schematic diagram of another converter applied to a photovoltaic power generation system according to Embodiment 4 of this application;
FIG. 6b is a schematic diagram of still another converter applied to a photovoltaic power generation system according to Embodiment 4 of this application;
FIG. 7 is a flowchart of a method for controlling a converter according to Embodiment 5 of this application;
FIG. 8 is a schematic diagram of a photovoltaic power generation system according to Embodiment 6 of this application; and
FIG. 9 is a schematic diagram of another photovoltaic power generation system according to Embodiment 7 of this application.

### DESCRIPTION OF EMBODIMENTS

Currently, to reduce costs of a photovoltaic power generation system, a plurality of photovoltaic components are connected in series outside a converter, and then connected to an input end of the converter (that is, one-to-many). Specific descriptions are provided in the following with reference to the accompanying drawings.

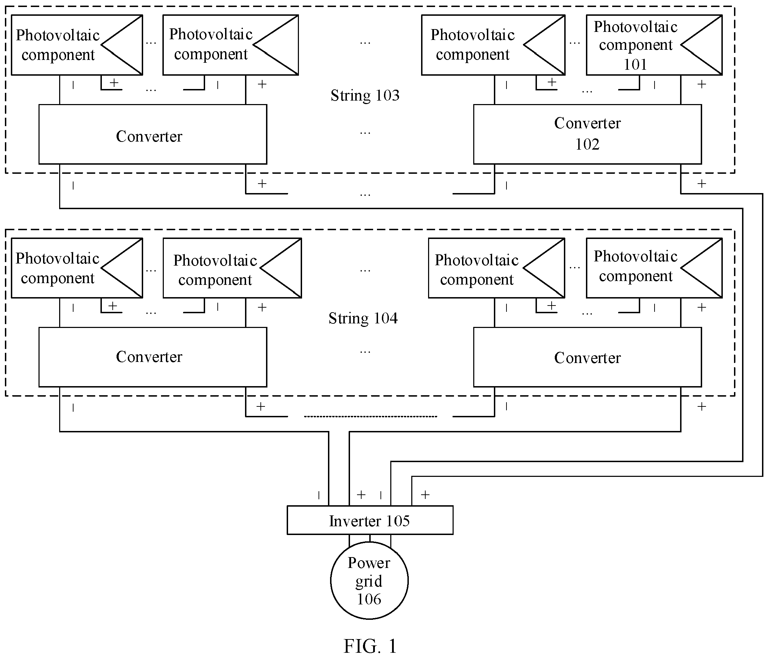

FIG. 1 is a schematic diagram of a photovoltaic power generation system according to this application.

Currently, when a "one-to-many" solution is used, a plurality of photovoltaic components 101 are connected in series outside a converter 102, and then connected to an input end of the converter 102. The plurality of photovoltaic components 101 are connected in series to form a string. The formed string includes two connection ends. One connection end is connected to a positive input end of the converter, and the other connection end is connected to a negative input end of the converter. For the photovoltaic component, in the connection, a positive output end of the photovoltaic component is connected to a negative output end of a previous photovoltaic component, and a negative output end of the photovoltaic component is connected to a positive output end of a next photovoltaic component. Output ends of converters may also be connected in series to form a converter string. The converter string includes two connection ends. One connection end is connected to a positive input end of an inverter 105, and the other connection end is connected to a negative input end of the inverter 105. For the converter string, in the connection, a positive output end of a converter is connected to a negative output end of a previous converter, and a negative output end of the converter is connected to a positive output end of a next converter. In addition, a plurality of converter strings may also be connected in parallel; and then connected to the input end of the inverter 105, or separately connected to different input ports of the input end of the inverter 105. The inverter 105 shown in the figure is connected to two converter strings, that is, a string 103 and a string 104. An output end of the inverter 105 is connected to a power grid 106. Generally, the inverter 105 can implement a direct current-alternating current conversion function, that is, convert a direct current into an alternating current and provide the alternating current for the power grid.

However, it is required by the NEC (National Electrical Code, national electric code) in the article NEC 2017-690.12(B) that a photovoltaic power generation system needs to support a component-level fast shutdown function. The national authoritative photovoltaic industry standard association (SunSpec Alliance) formulates a fast shutdown standard based on NEC 2014, NEC 2017, and UL 1741 (photovoltaic installation standard). The NEC is applicable to only a distributed power station in house construction. It is required in a standard of 2014 that a safe region surrounding a photovoltaic system is 3m. It is required in a standard of 2017 that a safe region surrounding a photovoltaic system is 1 foot (approximately equal to 30 cm), that is, component-level shutdown. It is specifically required in NEC 2017 that, within 30 seconds after a fast shutdown apparatus starts up, a voltage outside a safe region range is reduced to less than 30 V, and a voltage inside the safe region range is reduced to less than 80 V, that is, component-level shutdown.

A plurality of photovoltaic components are directly connected in series outside the converter. A total voltage obtained after the connection in series is greater than 80 V When the photovoltaic power generation system is shut down, the converter in the photovoltaic power generation system is shut down, and an output voltage of the converter 102 is zero. However, the plurality of photovoltaic components connected in series cannot be disconnected. As a result, a dangerous high voltage still exists in a photovoltaic array formed by the photovoltaic components connected in series, and a dangerous high voltage still exists at the input end of the converter, causing a potential danger to safety, which does not meet the NEC 2017 standard.

To resolve the foregoing technical problem, this application provides a converter, a method, and a system applied to a photovoltaic power generation system. A switching transistor is disposed inside the converter provided in this application. The converter supports access of at least two photovoltaic units. The photovoltaic units are connected in series inside the converter by using the switching transistor. When a controller of the converter receives a shutdown instruction or loses a heartbeat instruction within a preset time period, the controller controls the switching transistor to be disconnected, so that any two photovoltaic units connected in series are disconnected. Therefore, no dangerous high voltage exists in a photovoltaic array formed by the photovoltaic units, thereby improving safety of the photovoltaic power generation system, which meets a standard that no high voltage exists within a safe region.

To make a person skilled in the art understand the technical solutions in the present invention better, the following clearly describes the technical solutions in the embodiments of this application with reference to the accompanying drawings in the embodiments of this application.

### Embodiment 1

Embodiment 1 of this application provides a converter applied to a photovoltaic power generation system. An input end of the converter may be connected to a plurality of photovoltaic units. The plurality of photovoltaic units form a photovoltaic array. A single photovoltaic unit in this embodiment of this application may include one photovoltaic component, or may include a plurality of photovoltaic components connected in series and in parallel. For example, a plurality of photovoltaic components are first connected in series to form photovoltaic strings, and then the plurality of photovoltaic strings are connected in parallel to form the photovoltaic unit. A specific quantity of photovoltaic components are not specifically limited in this embodiment of this application. A person skilled in the art may set the quantity based on an actual requirement. In addition, an electrical parameter of the single photovoltaic component is not specifically limited in this embodiment of this application.

The converter provided in this embodiment of this application includes a power circuit, a controller, and at least one switching transistor. An input end of the converter has a plurality of input ports. Each input port includes a positive input terminal and a negative input terminal. The photovoltaic unit is connected to the converter by using the input port of the converter. The converter supports access of at least two photovoltaic units. The at least two photovoltaic units are connected in series inside the converter by using the switching transistor. Each photovoltaic unit may include only one photovoltaic component, or may include a plurality photovoltaic components connected in series and in parallel. A quantity of switching transistors inside the converter is not limited in this embodiment of this application. For example, the quantity of switching transistors inside the converter may be N-1, and the input end of the converter may be correspondingly connected to N photovoltaic units. Certainly, the input end of the converter may be alternatively connected to photovoltaic units whose quantity is less than N. In this case, a positive terminal and a negative terminal of an input port that is not connected to the photovoltaic unit are short circuited to each other.

When the controller receives a shutdown instruction or loses a heartbeat instruction within a preset time period, the controller controls all the switching transistors to be disconnected, so that any two photovoltaic components connected in series are disconnected. The preset time period may be set based on an actual requirement. This is not specifically limited in this application.

The shutdown instruction is delivered by an upper level of the controller, and the heartbeat instruction is also delivered by the upper level of the controller. The shutdown instruction means to directly shut down and stop operation. The heartbeat instruction means that the heartbeat instruction is sent only during normal operation. If the heartbeat instruction is not received within a preset time, it indicates that a fault occurs. The preset time may be set based on an actual requirement. This is not specifically limited in this embodiment of this application.

For ease of description, the following description is provided by using an example in which the input end of the converter includes at least the following two photovoltaic units: a first photovoltaic unit and a second photovoltaic unit, and each photovoltaic unit includes one photovoltaic component. In other words, the input end of the converter includes at least the following two photovoltaic components: a first photovoltaic component and a second photovoltaic component. Herein, "first" and "second" are merely used to distinguish between two photovoltaic units and photovoltaic components for ease of description, and do not constitute a limitation on this application. It may be understood that, when the input end of the converter includes more photovoltaic units and each photovoltaic unit includes a plurality of photovoltaic components, operation principles of the converter are similar. Details are not described herein in this application.

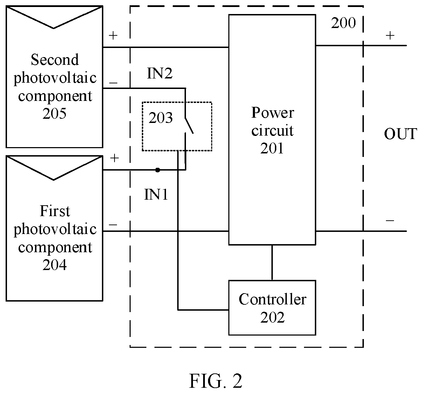

FIG. 2 is a schematic diagram of a converter applied to a photovoltaic power generation system according to Embodiment 1 of this application.

A converter 200 includes a power circuit 201, a controller 202, and a switching transistor 203.

In this embodiment, description is provided by using an example in which an input end of the converter is connected to two photovoltaic components: a first photovoltaic component 204 and a second photovoltaic component 205. One switching transistor in the converter is correspondingly used to implement connection in series. It may be understood that when the input end of the converter is connected to a plurality of photovoltaic components, a plurality of switching transistors in the converter are needed to implement connection in series. In other words, every two adjacent photovoltaic components are connected in series by using one switching transistor.

The input end of the converter has two input ports, which are respectively represented by using IN1 and IN2 in the figure. Each input port includes a positive input terminal and a negative input terminal. The first photovoltaic component is connected to the input port IN1 of the converter, and the second photovoltaic component is connected to the input port IN2 of the converter. The first photovoltaic component and the second photovoltaic component are connected in series inside the converter by using the switching transistor 203.

The power circuit 201 of the converter 200 is configured to perform power conversion. The power circuit may be a direct current-direct current (DC-DC) conversion circuit or a direct current-alternating current (DC-AC) conversion circuit, or may be only a connection control circuit.

When the power circuit is a direct current-direct current conversion circuit, the direct current-direct current conversion circuit may be specifically a boost (Boost) circuit, a buck (Buck) circuit, or a buck-boost (Buck-Boost) circuit. This is not specifically limited in this application.

When the converter 200 is in a normal operating mode, the controller 202 controls the switching transistor 203 to be connected, and the first photovoltaic component 204 and the second photovoltaic component 205 are connected in series inside the converter 200.

When the controller 202 receives a shutdown instruction or loses a heartbeat instruction within a preset time period, the controller 202 determines that a shutdown mode currently needs to be switched to. In this case, the controller 202 controls the switching transistor 203 to be disconnected, so that the first photovoltaic component 204 and the second photovoltaic component 205 are disconnected. The controller 202 may further control the power circuit 201 to stop power conversion; or limit an output voltage of the power circuit 201 to be less than a preset voltage value, where the preset voltage value is usually relatively low, for example, the preset voltage value may be set to 10 V; or limit an output current of the power circuit 201 to be less than a preset current value, for example, the preset current value may be set to 10 mA. Therefore, no dangerous high voltage exists at an output end of the converter. In this case, because the first photovoltaic component 204 and the second photovoltaic component 205 are disconnected, no dangerous high voltage exists in a photovoltaic array formed by the first photovoltaic component 204 and the second photovoltaic component 205, and no dangerous high voltage exists at the input end of the converter 200.

In addition, when a startup instruction is received and the heartbeat instruction is received again, the controller may further control the switching transistor to be connected; and control the power circuit 201 to recover power conversion, or release limitation on the output voltage of the power circuit 201, or release limitation on the output current of the power circuit 201.

The foregoing description is merely provided by using an example in which the converter is connected to two photovoltaic units and each photovoltaic unit includes only one photovoltaic component. A control manner corresponding to another case is similar. For example, when the input end of the converter is connected to three photovoltaic units, two switching transistors inside the converter are correspondingly used, and the three photovoltaic units are connected in series inside the converter by using two switching transistors.

With reference to a parameter table of a single photovoltaic component shown in Table 1, the following describes a reason for disconnecting photovoltaic components connected in series in this embodiment of this application.

**Table 1: Parameter table of a single photovoltaic component**

| Quantity of cells | Peak power/W | Peak power voltage/V | Peak power current/A | Open-circuit voltage/V | Short-circuit current/A |
|---|---|---|---|---|---|
| 48 | 210 | 24.9 | 8.45 | 31.2 | 9.05 |
| 60 | 260 | 30.3 | 8.59 | 37.7 | 9.09 |
| 72 | 310 | 36.3 | 8.53 | 45.6 | 8.99 |

It can be learned from Table 1 that, different quantities of electrochemical cells Cells included in the single photovoltaic component indicate different open-circuit voltages of the single photovoltaic component. However, an open-circuit voltage of the single photovoltaic component is less than 80 V, which meets the NEC 2017 standard. However, when the plurality of photovoltaic components are directly connected in series outside the converter and then connected to the input end of the converter, an open-circuit voltage of the plurality of photovoltaic components may be greater than 80 V For example, for a photovoltaic component including 72 cells, a total open-circuit voltage obtained after the two photovoltaic components are connected in series is 91.2 V In this case, after the photovoltaic power generation system implements a fast shutdown function, the converter is shut down, and an output voltage is zero. However, the external photovoltaic components connected in series cannot be disconnected, and an input voltage of the converter is still greater than 80 V As a result, a dangerous high voltage exists in the photovoltaic array, which does not meet the NEC 2017 standard.

In this embodiment of this application, the open-circuit voltage of the single photovoltaic unit connected to the converter is controlled to be less than 80 V For example, each photovoltaic unit may include two photovoltaic components each including 48 cells. When the photovoltaic units connected in series are disconnected, an open-circuit voltage of each photovoltaic unit is 62.4 V and is still less than 80 V, which meets the NEC 2017 standard.

A specific type of the switching transistor is not specifically limited in this application. For example, the switching transistor 203 may be any one of a relay, a BJT transistor (Bipolar Junction Transistor, transistor), a MOS transistor (metal oxide semiconductor, metal oxide semiconductor field effect transistor), or an IGBT (insulated gate bipolar transistor, insulated gate bipolar transistor).

The converter provided in this embodiment of this application includes the switching transistor configured to connect photovoltaic units. The converter supports access of the at least two photovoltaic units. The photovoltaic units are connected in series inside the converter by using the switching transistor. An operating status of the switching transistor is controlled by the controller of the converter. When the controller of the converter receives the shutdown instruction or loses the heartbeat instruction within the preset time period, the controller controls all the switching transistors to be disconnected, so that any two photovoltaic units connected in series can be disconnected. For a single photovoltaic unit, an output voltage of the photovoltaic unit is usually less than the standard required voltage: 80 V Therefore, no dangerous high voltage exists in the photovoltaic array formed by the photovoltaic units, thereby improving safety of the photovoltaic power generation system.

Based on the converter applied to the photovoltaic power generation system provided in Embodiment 1, Embodiment 2 of this application further provides another converter. The following description is provided by using an example in which the power circuit of the converter is a direct current-direct current conversion circuit and is specifically a buck-boost circuit.

### Embodiment 2

In this embodiment of this application, the following description is provided by still using an example in which the input end of the converter includes at least the following two photovoltaic units: a first photovoltaic unit and a second photovoltaic unit, and each photovoltaic unit includes one photovoltaic component. In other words, the input end of the converter includes at least the following two photovoltaic components: a first photovoltaic component and a second photovoltaic component.

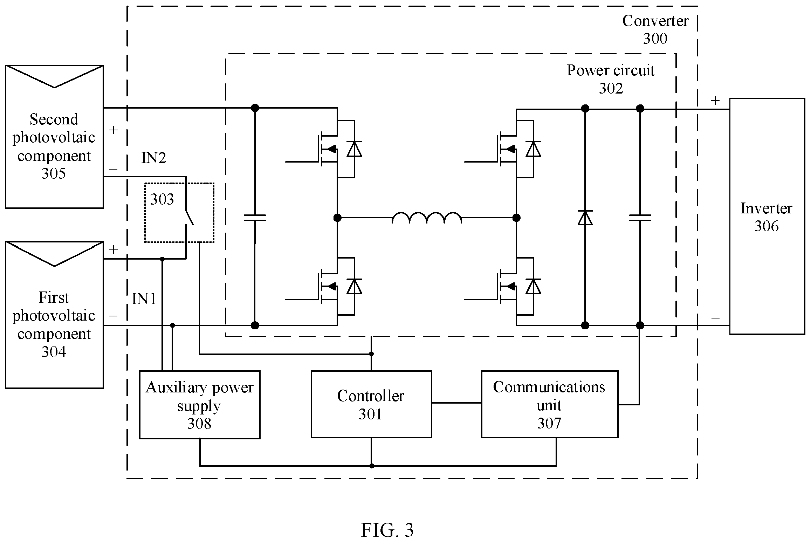

FIG. 3 is a schematic diagram of another converter applied to a photovoltaic power generation system according to Embodiment 2 of this application.

A difference between a converter 300 shown in FIG. 3 and the converter shown in FIG. 2 is that the converter 300 further includes a communications unit 307 and an auxiliary power supply 308. In addition, a power circuit 302 may be a DC-DC conversion circuit, or may be a DC-AC conversion circuit, or may be a connection control circuit. The following description is provided by using an example in which the power circuit 302 is specifically a DC-DC conversion circuit. Specifically, the DC-DC conversion circuit may be a buck-boost circuit. For operation principles of the remaining parts, refer to the related descriptions in Embodiment 1. Details are not described herein again.

When the power circuit 302 is specifically a DC-DC conversion circuit, the communications unit 307 is configured to communicate with an inverter. In other words, a corresponding photovoltaic power generation system includes a DC-DC converter and also includes a DC-AC converter (inverter). The inverter is an upper level of a controller of the DC-DC converter, and is configured to send a control signal to the controller of the DC-DC converter.

The communications unit 307 is configured to: receive the control signal from the inverter 306, and forward the control signal to the controller 301. The control signal includes the heartbeat instruction, the startup instruction, and the shutdown instruction.

The auxiliary power supply 308 may be connected to one of photovoltaic units connected to an input end of the converter 300, and is powered by the photovoltaic unit. In this embodiment of this application, an example in which a first photovoltaic component 304 supplies power to the auxiliary power supply 308 is used. Certainly, a second photovoltaic component 305 at the input end of the converter may also supply power to the auxiliary power supply 308. This is not specifically limited in this application. The auxiliary power supply 308 is configured to supply power to the controller 301 and the communications unit 307.

As shown in FIG. 3, the first photovoltaic component 304 and the second photovoltaic component 305 are connected in series inside the converter 300 by using a switching transistor 303. Initially, the converter 300 is in a shutdown state, and the switching transistor 303 is in a disconnected state. When the controller 301 receives a startup instruction and a heartbeat instruction sent by the communications unit 307, the controller 301 controls the switching transistor 303 to be connected, so that the first photovoltaic component 304 and the second photovoltaic component 305 are connected in series.

The communications unit 307 receives a control signal from an upper level. After the communications unit 307 receives the startup instruction and periodically receives the heartbeat instruction, the controller 301 drives the controllable switching transistor of the power circuit 302 to perform power conversion.

When the communications unit 307 receives a shutdown instruction or loses a heartbeat instruction within a preset time period, the communications unit 307 sends a corresponding control signal to the controller 301; and the controller 301 controls the power circuit 302 to stop operation, or limits an output voltage of the power circuit 302 to be less than a preset voltage value, or limits an output current of the power circuit 302 to be less than a preset current value. In this case, no dangerous high voltage exists at an output end of the power circuit 302. In addition, the controller 301 controls the switching transistor 303 to be disconnected, so that the first photovoltaic component 304 and the second photovoltaic component 305 are disconnected. In this case, no dangerous high voltage exists in a photovoltaic array formed by the first photovoltaic component 304 and the second photovoltaic component 305, and an output voltage of a single photovoltaic component is usually less than a standard required voltage: 80 V, thereby ensuring safety of the converter and safety in a specific surrounding range.

In addition, when the startup instruction is received and the heartbeat instruction is received again, the controller may further control the switching transistor to be connected; and control the power circuit 302 to recover power conversion, or release limitation on the output voltage of the power circuit 302, or release limitation on the output current of the power circuit.

The converter provided in this embodiment of this application further includes the communications unit and the auxiliary power supply. The auxiliary power supply is powered by a photovoltaic unit connected to the input end of the converter. No additional power supply is needed. The auxiliary power supply is configured to supply power to the controller and the communications unit. The communications unit can receive the control signal from the upper level, and forward the control signal to the controller. When the controller receives the shutdown instruction or loses the heartbeat instruction within the preset time period, the controller controls all the switching transistors to be disconnected. After the switching transistors are disconnected, any two photovoltaic units connected in series are disconnected. Therefore, no dangerous high voltage exists at the output end of the converter and in the photovoltaic array formed by the photovoltaic units, thereby ensuring safety of the converter and safety in a specific range surrounding the photovoltaic array and improving safety of the entire photovoltaic power generation system.

Each input port of the input end of the converter in the foregoing embodiment is connected to a photovoltaic unit. The following description is provided by using an example in which some input ports of the converter are connected to photovoltaic units while some input ports are not connected to photovoltaic units.

An example in which each photovoltaic unit includes one photovoltaic component is still used for description. However, the input end of the converter provided in this embodiment of this application may be alternatively connected to only one photovoltaic component. The following description is specifically provided with reference to the accompanying drawings.

### Embodiment 3

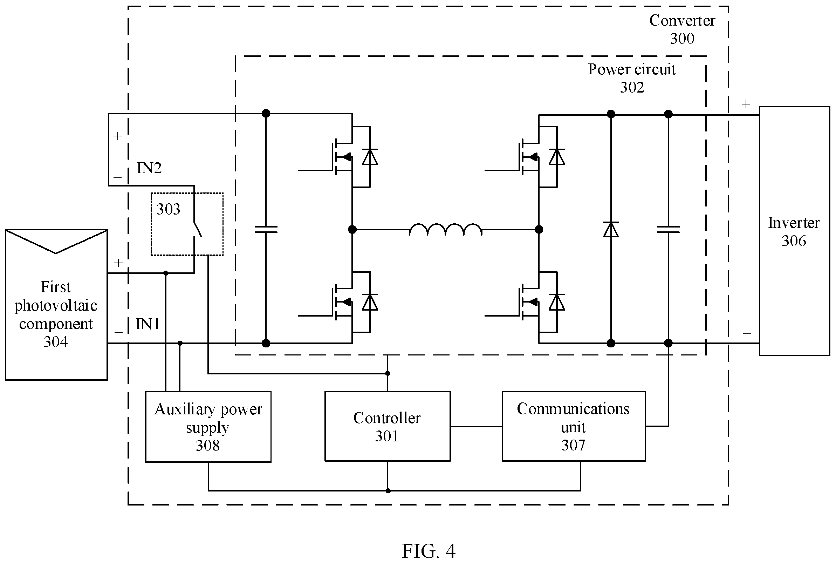

FIG. 4 is a schematic diagram of still another converter applied to a photovoltaic power generation system according to Embodiment 3 of this application.

An input end of the converter 300 has two input ports, which are respectively represented by using IN1 and IN2 in the figure. Each input port includes a positive input terminal and a negative input terminal. The input end of the converter 300 may be connected to only one photovoltaic component. In this embodiment, for example, the input end of the converter 300 is connected to only the first photovoltaic module 304. In this case, the input port IN2 is short-circuited. In a possible implementation, a positive input terminal and a negative input terminal of the input port IN2 may be interconnected to implement short-circuit.

In this case, only the first photovoltaic component 304 accesses the converter 300. Therefore, the first photovoltaic component 304 is connected to the auxiliary power supply 308, to supply power to the controller 301 and the communications unit 307.

After being connected to the first photovoltaic module 304, the auxiliary power supply 308 starts power supply. Initially, the converter 300 is in a shutdown state, and the switching transistor 303 is in a disconnected state. When the controller 301 receives a startup instruction and a heartbeat instruction sent by the communications unit 307, the controller 301 controls the switching transistor 303 to be connected. The first photovoltaic component 304 is connected to the input end of the converter 300 by using the switching transistor 303, that is, connected to the input end of the power circuit 302.

When the communications unit 307 receives a shutdown instruction or loses a heartbeat instruction within a preset time period, the communications unit 307 sends a corresponding control signal to the controller 301; and the controller 301 controls the power circuit 302 to stop power conversion, or limits an output voltage of the power circuit 302 to be less than a preset voltage value, or limits an output current of the power circuit 302 to be less than a preset current value. Therefore, no dangerous high voltage exists at an output end of the converter 300. In addition, the controller 301 controls the switching transistor 303 to be disconnected. Because the input end is connected to only the first photovoltaic component 304, no dangerous high voltage exists at the photovoltaic component.

When the startup instruction is received and the heartbeat instruction is received again, the controller may further control the switching transistor to be connected; and control the power circuit 302 to recover power conversion, or release limitation on the output voltage of the power circuit 302, or release limitation on the output current of the power circuit.

Certainly, the converter may further have a plurality of input ports that are connected to photovoltaic units, and some input ports that are not connected to photovoltaic units. The following description is provided by still using an example in which each photovoltaic unit includes one photovoltaic component.

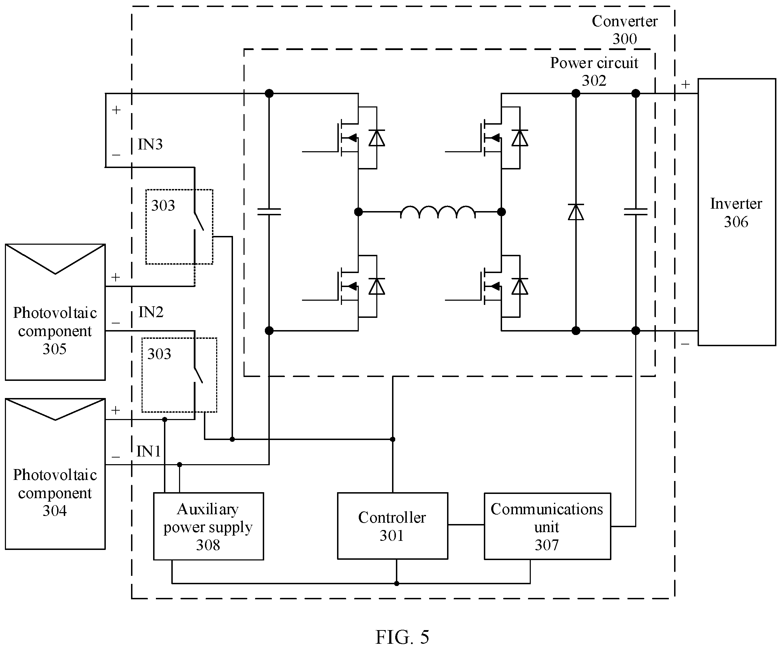

FIG. 5 is a schematic diagram of yet another converter applied to a photovoltaic power generation system according to Embodiment 3 of this application.

A difference between the converter shown in this figure and the converter shown in FIG. 4 is that the converter has three input ports, which are respectively represented by using IN1, IN2, and IN3 in the figure. Herein, IN1 is connected to the first photovoltaic module 304, and IN2 is connected to the second photovoltaic module 305. In this case, the input port IN3 is short-circuited. In a possible implementation, a positive input terminal and a negative input terminal of the input port IN2 may be interconnected to implement short-circuit, and the first photovoltaic component 304 supplies power to the auxiliary power supply 308.

For operation principles of other parts in the figure, refer to the foregoing embodiment. Details are not described herein again.

The input ports at an input end of the converter provided in this embodiment of this application may be partially connected to photovoltaic units, and partially not connected to photovoltaic units. When a quantity of switching transistors in the converter is determined, a quantity of photovoltaic units connected to the converter may be selected based on an actual situation. For an input port that is not connected to a photovoltaic unit, two ends of the input port are interconnected. Therefore, application of the converter is more convenient and flexible.

In Embodiment 1 and Embodiment 2, description is provided by using an example in which the input end of the converter is connected to two photovoltaic components. However, the input end of the converter provided in this application may be further connected to more photovoltaic units. The following description is further provided by using an example in which each photovoltaic unit includes one photovoltaic component.

### Embodiment 4

In this embodiment of this application, description is still provided by using an example in which a power circuit of a converter is a buck-boost circuit. When the power circuit of the converter is a circuit of another type, a similar principle is applied. Details are not described herein in this application.

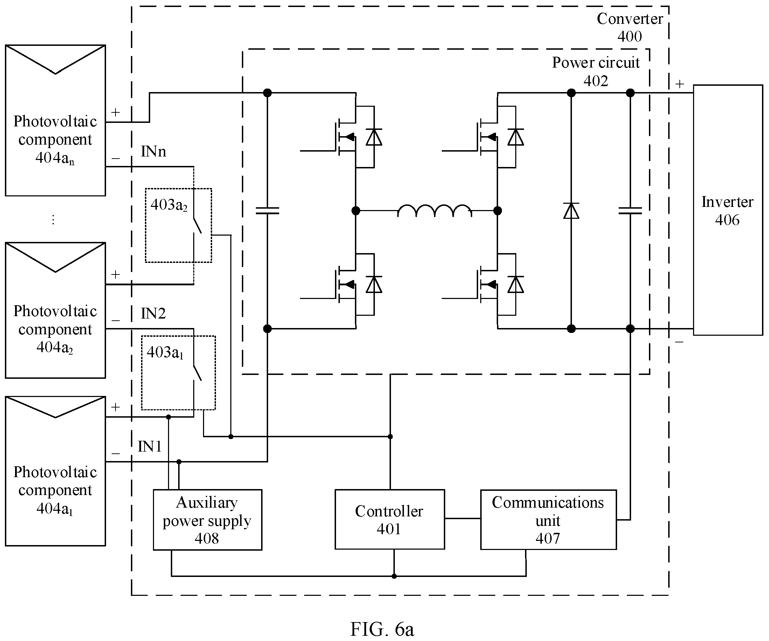

FIG. 6a is a schematic diagram of another converter applied to a photovoltaic power generation system according to Embodiment 4 of this application.

A difference between a converter 400 shown in FIG. 6a and the converter 300 shown in FIG. 3 is that an input end of the converter 400 shown in FIG. 6a includes n photovoltaic components 404a₁-404aₙ, and correspondingly includes n-1 switching transistors 403a₁-403aₙ₋₁. For descriptions of other parts of the converter 400, refer to Embodiment 2. Details are not described herein again.

When the photovoltaic components 404a₁-404aₙ are connected to the input end of the converter 400, the photovoltaic components are connected in series inside the converter 400 by using the switching transistors, and one switching transistor is connected in series between every two adjacent components.

Any one of the n photovoltaic components may be connected to an axillary power supply 408 to supply power to the axillary power supply 408. In this embodiment of this application, an example in which the photovoltaic component 404a₁ is connected to the axillary power supply 408 is used.

After the auxiliary power supply 408 is connected to the n photovoltaic components, the photovoltaic component 404a₁ supplies power to the auxiliary power supply 408, and the auxiliary power supply 408 supplies power to a controller 401 and a communications unit 407. Initially, the converter 400 is in a shutdown state, and the switching transistors 403a₁-403aₙ₋₁ are all in a disconnected state. When the controller receives a startup instruction and a heartbeat instruction sent by the communications unit 407, the controller 401 controls the switching transistors 403a₁-403aₙ₋₁ to be connected.

The communications unit 407 receives a control signal from an upper level. After the startup instruction is received and the heartbeat instruction is periodically received, the controller 401 drives the controllable switching transistor of the power circuit 402 to perform power conversion.

When the communications unit 407 receives a shutdown instruction or loses a heartbeat instruction within a preset time period, the communications unit 407 sends a corresponding control signal to the controller 401; and the controller 401 controls the power circuit 402 to stop power conversion, or limits an output voltage of the power circuit 402 to be less than a preset voltage value, or limits an output current of the power circuit 402 to be less than a preset current value. Therefore, no dangerous high voltage exists at an output end of the converter 400. In addition, the controller 401 controls the switching transistors 403a₁-403aₙ₋₁ to be disconnected, so that any two photovoltaic components connected in series are disconnected. In this case, no dangerous high voltage exists in the photovoltaic array formed by the photovoltaic components 404a₁-404aₙ. In addition, an output voltage of a single photovoltaic component is usually less than a standard required voltage: 80 V Therefore, no dangerous high voltage exists at the input end of the converter, thereby ensuring safety of the converter and safety in a specific surrounding range.

In addition, when the startup instruction is received and the heartbeat instruction is received again, the controller may further control the switching transistor to be connected; and control the power circuit 402 to recover power conversion, or release limitation on the output voltage of the power circuit 402, or release limitation on the output current of the power circuit 402.

The input end of the converter provided in this embodiment of this application may be connected to a plurality of photovoltaic units. The plurality of photovoltaic units are connected in series inside the converter by using the switching transistors. The controller of the converter can control all the switching transistors. When the controller receives the shutdown instruction or loses the heartbeat instruction within the preset time period, the controller controls all the switching transistors to be disconnected, so that any two photovoltaic units connected in series are disconnected. For a single photovoltaic unit, an output voltage of the photovoltaic unit is usually less than the standard required voltage: 80 V, which meets a standard voltage requirement for fast shutdown. In actual application, a specific quantity of photovoltaic units connected to the input end of the converter and a quantity of photovoltaic components included in each photovoltaic unit can be determined based on a requirement. It is more convenient and flexible during connection.

Still referring to FIG. 6a, the n photovoltaic components are connected to the converter by using n input ports of the input end of the converter 400, which are respectively represented by using IN1, IN2, ..., and INn in the figure. Each input port includes a positive input terminal and a negative input terminal.

For the converter 400 including the n input ports and the n-1 switching transistors, the input end of the converter may be correspondingly connected to the n photovoltaic components. In actual use, the input ports may be connected to only m photovoltaic components, and other input port may be not connected to photovoltaic components, where m=1, 2, ..., n-1. A specific value of m is not limited in this embodiment of this application. In a possible implementation, a positive input terminal and a negative input terminal of an input port that is not connected to a photovoltaic component may be interconnected to implement short-circuit. The photovoltaic component that supplies power to the auxiliary power supply 408 is then determined from the photovoltaic components connected to the converter 400.

In this case, when the controller receives the shutdown instruction or loses the heartbeat instruction within the preset time period, the controller controls the switching transistor to be disconnected, so that any two photovoltaic units connected in series are disconnected. Therefore, no dangerous high voltage exists at the output end of the converter and in a photovoltaic array formed by the photovoltaic units, thereby ensuring safety of the converter and safety in a specific range surrounding the photovoltaic array and improving safety of the entire photovoltaic power generation system.

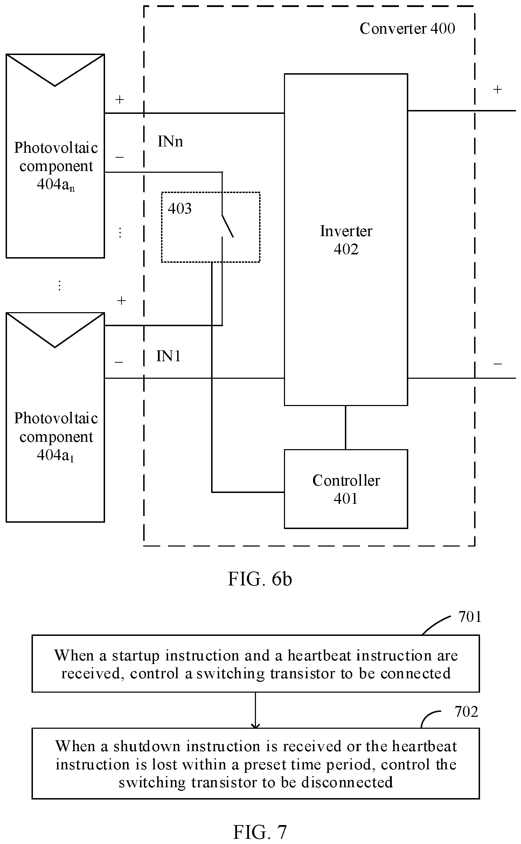

FIG. 6b is a schematic diagram of still another converter applied to a photovoltaic power generation system according to Embodiment 4 of this application.

A difference between a converter 400 shown in FIG. 6b and the converter shown in FIG. 3 is that a power circuit of the converter shown in FIG. 6b is specifically an inverter 402, and the inverter 402 can convert a direct current into an alternating current for output. Herein, the n photovoltaic components are connected to the converter 400 by using n input ports of the inverter 402. When the controller receives a shutdown instruction or loses a heartbeat instruction within a preset time period, the controller controls the switching transistor 403 to be disconnected, so that any two photovoltaic units connected in series are disconnected. Therefore, no dangerous high voltage exists at an output end of the inverter 402 and in a photovoltaic array formed by photovoltaic units, thereby ensuring safety of the inverter 402 and safety in a specific range surrounding the photovoltaic array and improving safety of the entire photovoltaic power generation system.

### Embodiment 5

Based on the converter applied to a photovoltaic power generation system provided in the foregoing embodiment, Embodiment 5 of this application further provides a method for controlling a converter. The following is specifically described with reference to the accompanying drawings.

FIG. 7 is a flowchart of a method for controlling a converter according to Embodiment 5 of this application.

The method provided in this embodiment of this application is used to control the converter. The converter includes a power circuit, a controller, and at least one switching transistor. An input end of the converter has a plurality of input ports. Each input port includes a positive input terminal and a negative input terminal. The photovoltaic unit is connected to the converter by using the input port of the converter. The converter supports access of at least two photovoltaic units. The at least two photovoltaic units are connected in series inside the converter by using the switching transistor. Each photovoltaic unit is formed by at least one photovoltaic component connected in series and in parallel. For the descriptions of the converter, refer to the foregoing embodiment. Details are not described herein again in this embodiment.

The method includes the following steps.

S701. When a startup instruction is received and a heartbeat instruction is received, control the switching transistor to be connected.

The following description is provided by still using an example in which the input end of the converter includes at least the following two photovoltaic units: a first photovoltaic unit and a second photovoltaic unit, and each photovoltaic unit includes one photovoltaic component.

Still referring to the converter shown in FIG. 3, before startup, the power circuit does not operate, and the switching transistor is in a disconnected state. When the controller receives a startup instruction and a heartbeat instruction sent by the communications unit, the controller controls the switching transistor to be connected, so that the first photovoltaic component and the second photovoltaic component are connected in series.

The controller drives the controllable switching transistor of the power circuit to perform power conversion. For example, when the power circuit is a DC-DC conversion circuit and is specifically a buck-boost circuit, the controller drives the buck-boost circuit to buck or boost an input voltage and then outputs the voltage to the inverter.

S702. When a shutdown instruction is received or a heartbeat instruction is lost within a preset time period, control the switching transistor to be disconnected.

When the communications unit receives the shutdown instruction or loses the heartbeat instruction within the preset time period, the communications unit sends a corresponding control signal to the controller; and the controller controls the power circuit to stop operation, or limits an output voltage of the power circuit to be less than a preset voltage value, or limits an output current of the power circuit to be less than a preset current value. Therefore, no dangerous high voltage exists at an output end of the converter. In addition, the controller controls the switching transistor to be disconnected, so that the first photovoltaic component and the second photovoltaic component connected in series are disconnected. In this case, no dangerous high voltage exists in the photovoltaic array, thereby ensuring safety of the converter and safety in a specific surrounding range.

In the method for controlling a converter provided in this embodiment of this application, when a shutdown function is implemented in the photovoltaic power generation system, the switching transistor can be controlled to be disconnected, so that any two photovoltaic units connected in series are disconnected. Therefore, no dangerous high voltage exists in the photovoltaic array formed by the photovoltaic units, thereby ensuring safety of the converter and safety in a specific range surrounding the photovoltaic array. In this way, safety of the entire photovoltaic power generation system is improved.

### Embodiment 6

Based on the converter applied to a photovoltaic power generation system provided in the foregoing embodiment, Embodiment 6 of this application further provides a photovoltaic power generation system. The following description is specifically provided by using an example in which each photovoltaic unit includes one photovoltaic component.

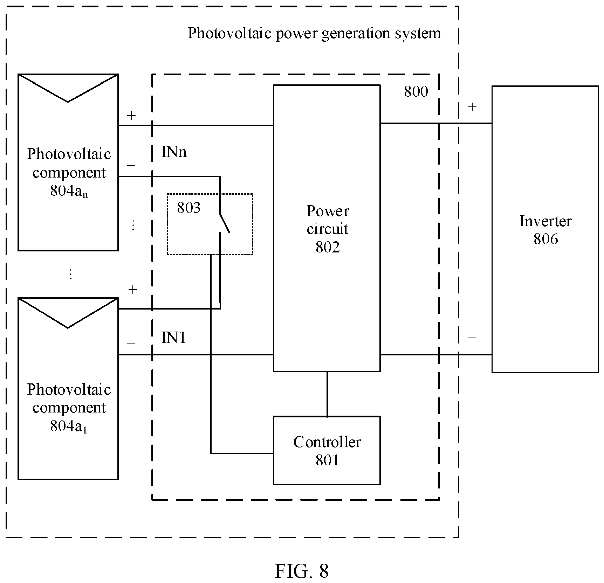

FIG. 8 is a schematic diagram of a photovoltaic power generation system according to Embodiment 6 of this application.

The photovoltaic power generation system provided in this embodiment of this application includes at least two photovoltaic units and a converter 800. Each photovoltaic unit includes one photovoltaic component. An input end of the converter has a plurality of input ports. Each input port includes a positive input terminal and a negative input terminal. The photovoltaic unit is connected to the converter by using the input port of the converter. Photovoltaic components 804a₁-804aₙ shown in the figure are connected in series inside the converter 800 by using a switching transistor. Herein, n is an integer greater than or equal to 2. The converter 800 includes a power circuit 802, a controller 801, and a switching transistor 803.

A quantity of switching transistors 803 in the converter 800 is not limited in this embodiment of this application. For example, the quantity of switching transistors 803 inside the converter 800 may be n-1, and the input end of the converter 800 may be correspondingly connected to n photovoltaic units. Certainly, the input end of the converter 800 may be alternatively connected to photovoltaic units whose quantity is less than N. In this case, a positive terminal and a negative terminal of an input port that is not connected to the photovoltaic unit are interconnected to implement short-circuit.

For specific descriptions of the converter, refer to the foregoing Embodiment 1 to Embodiment 4. Details are not described herein again in this embodiment.

The converter in the photovoltaic power generation system provided in this embodiment includes the switching transistor configured to connect the photovoltaic units. An operating status of the switching transistor is controlled by the controller of the converter. When the controller of the converter receives a shutdown instruction or loses a heartbeat instruction within a preset time period, the controller controls all the switching transistors to be disconnected. The photovoltaic units are connected in series by using the switching transistors. Therefore, after all the switching transistors are disconnected, any two photovoltaic units connected in series can be disconnected. For each photovoltaic unit, an output voltage of the photovoltaic unit is usually less than a standard required voltage: 80 V Therefore, no dangerous high voltage exists in a photovoltaic array formed by the photovoltaic units, thereby improving safety of the photovoltaic power generation system.

### Embodiment 7

Embodiment 7 of this application further provides another photovoltaic power generation system. A difference between Embodiment 7 and Embodiment 6 is that a power circuit in the photovoltaic power generation system provided in this embodiment of this application is a DC-DC conversion circuit. When there are a plurality of DC-DC conversion circuits, the plurality of DC-DC conversion circuits are connected in series to form a DC-DC conversion circuit string, and the DC-DC conversion circuit string is connected to an input end of an inverter. Further, there may be a plurality of DC-DC conversion circuit strings. The plurality of DC-DC conversion circuit strings may be connected in parallel; and then connected to the input end of the inverter, or separately connected to different input ports of the input end of the inverter. The following description is specifically provided with reference to the accompanying drawings.

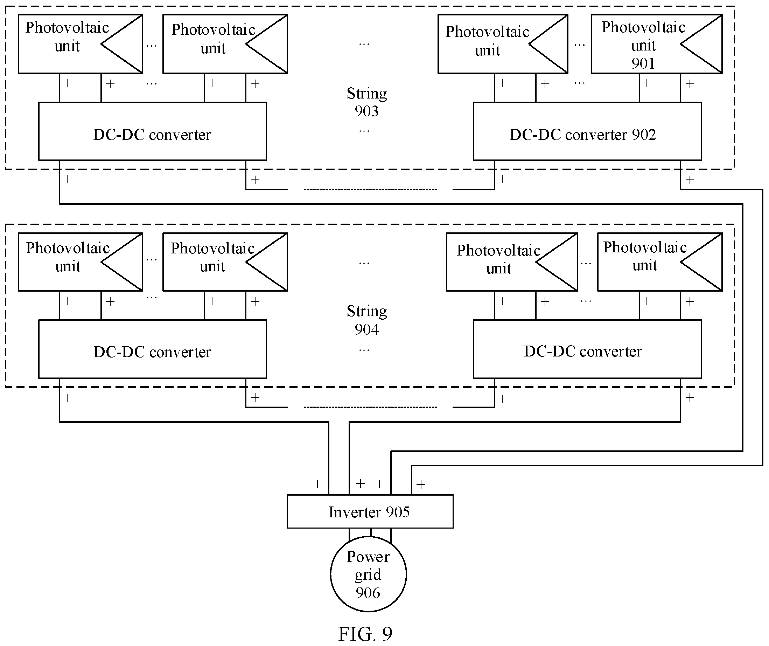

FIG. 9 is a schematic diagram of a photovoltaic power generation system according to Embodiment 7 of this application.

When the power circuit of the converter is the DC-DC conversion circuit, the converter is correspondingly a DC-DC converter, which is represented by using 902 in the figure. The photovoltaic power generation system includes a plurality of DC-DC conversion circuits, that is, the photovoltaic power generation system includes a plurality of DC-DC converters.

A plurality of photovoltaic units 901 are connected to input ports of the DC-DC converters, and are connected in series by using switching transistors inside the DC-DC converters 902. Every two adjacent photovoltaic units are connected by using a switching transistor.

Output ends of the plurality of DC-DC converter 902 are connected in series to form DC-DC converter strings. In addition, the plurality of DC-DC converter strings may further be connected in parallel and then connected to an input end of an inverter 905, or the plurality of DC-DC converter strings are separately connected to different input ports of an input end of an inverter 905. In the figure, an example in which the inverter 905 is connected to two DC-DC converter strings: a string 903 and a string 904 are used. A quantity of strings may be set based on an actual situation. Different strings may include a same quantity of DC-DC converters or different quantities of DC-DC converters. This is not specifically limited in this application. An output end of the inverter 905 is connected to a power grid 906. Generally, the inverter 905 can implement a DC-AC conversion function, that is, convert a direct current into an alternating current and provide the alternating current for the power grid 906.

The converter in the photovoltaic power generation system provided in this embodiment includes the switching transistor configured to connect the photovoltaic units. The photovoltaic units are connected in series inside the converter by using the switching transistor. An operating status of the switching transistor is controlled by a controller of the converter. When the controller of the converter receives a shutdown instruction or loses a heartbeat instruction within a preset time period, the controller controls all the switching transistors to be disconnected. The photovoltaic units are connected in series by using the switching transistors. Therefore, after all the switching transistors are disconnected, any two photovoltaic units connected in series can be disconnected. For a single photovoltaic unit, an output voltage of the photovoltaic unit is usually less than a standard required voltage: 80 V Therefore, no dangerous high voltage exists in a photovoltaic array formed by the photovoltaic units, thereby improving safety of the photovoltaic power generation system.

In actual application, the plurality of converters may be connected in series to form a string connected to the input end of the inverter, or the plurality of converter strings may be connected in parallel and connected to the input end of the inverter. Each converter in the photovoltaic power generation system provided in this embodiment of this application can still meet a standard fast shutdown requirement when an input end of the converter is connected to a plurality of photovoltaic units. Therefore, a quantity of converters in the photovoltaic power generation system can be reduced, thereby effectively simplifying onsite wiring and reducing system costs.

It should be understood that in this specification, "at least one" means one or more, and "a plurality of" means two or more. In addition, "and/or" is used to describe an association relationship of associated objects, and indicates that there may be three relationships. For example, "A and/or B" may indicate the following three cases: Only A exists, only B exists, and both A and B exist, where A or B may be singular or plural. The character "/" generally indicates an "or" relationship between the associated objects. In addition, "at least one of the following" or a similar expression thereof indicates any combination of these items, including any combination of a single item or a plurality of items. For example, at least one of a, b, or c may indicate that a, b, c, "a and b", "a and c", "b and c", or "a, b, and c", where a, b, and c may be singular or plural.

## Claims

1. A converter (200, 300, 400, 800) applied to a photovoltaic power generation system, comprising: a controller (202, 301, 401, 801), a plurality of input ports, a power circuit (201, 302, 402, 802), wherein the power circuit is a direct current-direct current conversion circuit, a direct current-alternating current conversion circuit, or a connection control circuit, and at least one switching transistor (203, 303, 403, 803), wherein
the converter supports access of at least two photovoltaic units (204, 205, 304, 305, 404, 804) via the input ports, the input ports are arranged such that the at least two photovoltaic units, when connected to the input ports, are connected in series inside the converter by using the switching transistor; and
the controller is configured to: when a startup instruction is received and a heartbeat instruction is received, control the switching transistor to be connected; and
when a shutdown instruction is received or a heartbeat instruction is lost within a preset time period, control the switching transistor to be disconnected, so that any two photovoltaic units connected in series are disconnected and control the power circuit to stop power conversion, or limit an output voltage of the power circuit to be less than a preset voltage value, or limit an output current of the power circuit to be less than a preset current value.

2. The converter according to claim 1, wherein the controller is further configured to: when the startup instruction and the heartbeat instruction are received, control the power circuit to recover power conversion, or release limitation on the output voltage of the power circuit, or release limitation on the output current of the power circuit.

3. The converter according to claim 1, wherein when the power circuit is a direct current-direct current conversion circuit, the direct current-direct current conversion circuit is a boost circuit, a buck circuit, or a buck-boost circuit.

4. The converter according to claim 3, further comprising a communications unit (307, 407), wherein
the communications unit is configured to: receive a control signal from an upper level, and forward the control signal to the controller, wherein the control signal comprises the heartbeat instruction, the startup instruction, and the shutdown instruction.

5. The converter according to claim 4, further comprising an auxiliary power supply (308, 408), wherein
an input end of the converter is connected to the auxiliary power supply, such that when a photovoltaic unit of the at least two photovoltaic units is connected to the input end of the converter, the photovoltaic unit supplies power to the auxiliary power supply; and
the auxiliary power supply supplies power to the controller and the communications unit.

6. The converter according to any one of claims 1 to 5, wherein the switching transistor is any one of the following:
a transistor, an insulated gate bipolar transistor, and a metal oxide semiconductor field effect transistor.

7. A method for controlling a converter (200, 300, 400, 800), wherein the converter is applied to a photovoltaic power generation system, the converter comprises a controller (202, 301, 401, 801), a plurality of input ports, a power circuit (201, 302, 402, 802), wherein the power circuit is a direct current-direct current conversion circuit, a direct current-alternating current conversion circuit, or a connection control circuit, and at least one switching transistor (203, 303, 403, 803), the converter supports access of at least two photovoltaic units via the input ports, the input ports are arranged such that the at least two photovoltaic units, when connected to the input ports, are connected in series inside the converter by using the switching transistor; and the method comprises:
(701) when a startup instruction is received and the heartbeat instruction is received, controlling the switching transistor to be connected.
(702) when a shutdown instruction is received or a heartbeat instruction is lost within a preset time period, controlling the switching transistor to be disconnected, so that any two photovoltaic units connected in series are disconnected and controlling the power circuit to stop power conversion, or limit an output voltage of the power circuit to be less than a preset voltage value, or limit an output current of the power circuit to be less than a preset current value..

8. A photovoltaic power generation system, comprising at least two photovoltaic units (804) and the converter according to any one of claims 1 to 6, wherein
the at least two photovoltaic units are connected to the converter; and
the at least two photovoltaic units are connected in series inside the converter by using a switching transistor (203, 303, 403, 803), and the photovoltaic unit is formed by either a single photovoltaic component or a plurality of photovoltaic components connected in series and in parallel.

9. The system according to claim 8, wherein when the power circuit is a direct current-direct current conversion circuit (902) and there are a plurality of direct current-direct current conversion circuits, the plurality of direct current-direct current conversion circuits are connected in series to form a direct current-direct current conversion circuit string (903, 904), and the direct current-direct current conversion circuit string is connected to an input end of an inverter (905); and
the inverter is configured to: convert a direct current output by the direct current-direct current conversion circuit string into an alternating current, and output the alternating current.

10. The system according to claim 9, wherein there are a plurality of direct current-direct current conversion circuit strings; and
the plurality of direct current-direct current conversion circuit strings are connected in parallel to the input end of the inverter, or are separately connected to different input ports of the input end of the inverter.

## Patentansprüche

1. Wandler (200, 300, 400, 800), der auf ein fotovoltaisches Energieerzeugungssystem angewendet wird, der umfasst: eine Steuerung (202, 301, 401, 801), eine Vielzahl von Eingangsanschlüssen, eine Leistungsschaltung (201, 302, 402, 802), wobei die Leistungsschaltung eine Gleichstrom-Gleichstrom-Umwandlungsschaltung, eine Gleichstrom-Wechselstrom-Umwandlungsschaltung oder eine Verbindungssteuerschaltung ist, und mindestens einen Schalttransistor (203, 303, 403, 803), wobei
der Wandler einen Zugriff von mindestens zwei fotovoltaischen Einheiten (204, 205, 304, 305, 404, 804) über die Eingangsanschlüsse unterstützt, die Eingangsanschlüsse derart angeordnet sind, dass die mindestens zwei fotovoltaischen Einheiten, wenn sie mit den Eingangsanschlüssen verbunden sind, innerhalb des Wandlers durch Verwenden des Schalttransistors in Reihe geschaltet sind; und
die Steuerung konfiguriert ist zum: wenn eine Startanweisung empfangen wird und eine Heartbeat-Anweisung empfangen wird, Steuern des zu verbindenden Schalttransistors; und
wenn eine Abschaltanweisung empfangen wird oder eine Heartbeat-Anweisung innerhalb eines voreingestellten Zeitraums verloren geht, Steuern des zu trennenden Schalttransistors, sodass beliebige zwei in Reihe geschaltete fotovoltaische Einheiten getrennt werden, und Steuern der Leistungsschaltung, um die Leistungsumwandlung zu stoppen oder eine Ausgangsspannung der Leistungsschaltung zu begrenzen, sodass sie kleiner als ein voreingestellter Spannungswert ist, oder einen Ausgangsstrom der Leistungsschaltung zu begrenzen, sodass er kleiner als ein voreingestellter Stromwert ist.

2. Wandler nach Anspruch 1, wobei die Steuerung ferner konfiguriert ist zum: wenn die Startanweisung und die Heartbeat-Anweisung empfangen werden, Steuern der Leistungsschaltung, um eine Leistungsumwandlung wiederherzustellen, oder Aufheben einer Begrenzung der Ausgangsspannung der Leistungsschaltung oder Aufheben der Begrenzung des Ausgangsstroms der Leistungsschaltung.

3. Wandler nach Anspruch 1, wobei, wenn die Leistungsschaltung eine Gleichstrom-Gleichstrom-Umwandlungsschaltung ist, die Gleichstrom-Gleichstrom-Umwandlungsschaltung eine Verstärkungsschaltung, eine Abwärtsschaltung oder eine Abwärtsverstärkungsschaltung ist.

4. Wandler nach Anspruch 3, der ferner eine Kommunikationseinheit (307, 407) umfasst, wobei
die Kommunikationseinheit konfiguriert ist zum: Empfangen eines Steuersignals von einer oberen Ebene und Weiterleiten des Steuersignals an die Steuerung, wobei das Steuersignal die Heartbeat-Anweisung, die Startanweisung und die Abschaltanweisung umfasst.

5. Wandler nach Anspruch 4, der ferner eine Hilfsleistungsversorgung (308, 408) umfasst, wobei
ein Eingangsende des Wandlers mit der Hilfsleistungsversorgung derart verbunden ist, dass, wenn eine fotovoltaische Einheit der mindestens zwei fotovoltaischen Einheiten mit dem Eingangsende des Wandlers verbunden ist, die fotovoltaische Einheit die Hilfsleistungsversorgung mit Leistung versorgt; und
die Hilfsleistungsversorgung die Steuerung und die Kommunikationseinheit mit Leistung versorgt.

6. Wandler nach einem der Ansprüche 1 bis 5, wobei der Schalttransistor ein beliebiges der Folgenden ist: ein Transistor, ein Bipolartransistor mit isolierter Gate-Elektrode und ein Metalloxid-Halbleiter-Feldeffekttransistor.

7. Verfahren zum Steuern eines Wandlers (200, 300, 400, 800), wobei der Wandler auf ein fotovoltaisches Energieerzeugungssystem angewendet wird, wobei der Wandler eine Steuerung (202, 301, 401, 801), eine Vielzahl von Eingangsanschlüssen, eine Leistungsschaltung (201, 302, 402, 802), wobei die Leistungsschaltung eine Gleichstrom-Gleichstrom-Umwandlungsschaltung, eine Gleichstrom-Wechselstrom-Umwandlungsschaltung oder eine Verbindungssteuerschaltung ist, und mindestens einen Schalttransistor (203, 303, 403, 803) umfasst, wobei der Wandler einen Zugriff von mindestens zwei fotovoltaischen Einheiten über die Eingangsanschlüsse unterstützt, wobei die Eingangsanschlüsse derart angeordnet sind, dass die mindestens zwei fotovoltaischen Einheiten, wenn sie mit den Eingangsanschlüssen verbunden sind, innerhalb des Wandlers durch Verwenden des Schalttransistors in Reihe geschaltet sind; und das Verfahren umfasst:
(701), wenn eine Startanweisung empfangen wird und die Heartbeat-Anweisung empfangen wird, Steuern des zu verbindenden Schalttransistors.
(702), wenn eine Abschaltanweisung empfangen wird oder eine Heartbeat-Anweisung innerhalb eines voreingestellten Zeitraums verloren geht, Steuern des zu trennenden Schalttransistors, sodass beliebige zwei in Reihe geschaltete fotovoltaische Einheiten getrennt werden, und Steuern der Leistungsschaltung, um die Leistungsumwandlung zu stoppen oder eine Ausgangsspannung der Leistungsschaltung zu begrenzen, sodass sie kleiner als ein voreingestellter Spannungswert ist, oder einen Ausgangsstrom der Leistungsschaltung zu begrenzen, sodass er kleiner als ein voreingestellter Stromwert ist..

8. Fotovoltaisches Energieerzeugungssystem, das mindestens zwei fotovoltaische Einheiten (804) und den Wandler nach einem der Ansprüche 1 bis 6 umfasst, wobei die mindestens zwei fotovoltaischen Einheiten mit dem Wandler verbunden sind und die mindestens zwei fotovoltaischen Einheiten innerhalb des Wandlers durch Verwenden eines Schalttransistors (203, 303, 403, 803) in Reihe geschaltet sind und die fotovoltaische Einheit entweder durch eine einzelne fotovoltaische Komponente oder eine Vielzahl von in Reihe und parallel geschalteten fotovoltaischen Komponenten gebildet wird.

9. System nach Anspruch 8, wobei, wenn die Leistungsschaltung eine Gleichstrom-Gleichstrom-Umwandlungsschaltung (902) ist und eine Vielzahl von Gleichstrom-Gleichstrom-Umwandlungsschaltungen vorhanden sind, die Vielzahl von Gleichstrom-Gleichstrom-Umwandlungsschaltungen in Reihe geschaltet sind, um eine Gleichstrom-Gleichstrom-Umwandlungsschaltungs-Kette (903, 904) zu bilden, und die Gleichstrom-Gleichstrom-Umwandlungsschaltungs-Kette mit einem Eingangsende eines Wechselrichters (905) verbunden ist; und
der Wechselrichter konfiguriert ist zum: Umwandeln eines durch die Gleichstrom-Gleichstrom-Umwandlungsschaltungs-Kette ausgegebenen Gleichstroms in einen Wechselstrom und Ausgeben des Wechselstroms.

10. System nach Anspruch 9, wobei eine Vielzahl von Gleichstrom-Gleichstrom-Umwandlungsschaltungs-Ketten vorhanden ist und
die Vielzahl von Gleichstrom-Gleichstrom-Umwandlungsschaltungs-Ketten parallel mit dem Eingangsende des Wechselrichters verbunden sind oder separat mit unterschiedlichen Eingangsanschlüssen des Eingangsendes des Wechselrichters verbunden sind.

## Revendications

1. Convertisseur (200, 300, 400, 800) appliqué à un système de génération de puissance photovoltaïque, comprenant : un dispositif de commande (202, 301, 401, 801), une pluralité de ports d'entrée, un circuit de puissance (201, 302, 402, 802), dans lequel le circuit de puissance est un circuit de conversion de courant continu-courant continu, un circuit de conversion de courant continu-courant alternatif ou un circuit de commande de connexion, et au moins un transistor de commutation (203, 303, 403, 803), dans lequel
le convertisseur supporte l'accès d'au moins deux unités photovoltaïques (204, 205, 304, 305, 404, 804) par l'intermédiaire des ports d'entrée, les ports d'entrée sont agencés de telle sorte que les au moins deux unités photovoltaïques, lorsqu'elles sont connectées aux ports d'entrée, sont connectées en série à l'intérieur du convertisseur à l'aide du transistor de commutation ; et
le dispositif de commande est configuré pour : lorsqu'une instruction de démarrage est reçue et qu'une instruction de battement de coeur est reçue, commander le transistor de commutation à se connecter ; et
lorsqu'une instruction d'arrêt est reçue ou qu'une instruction de battement de coeur est perdue dans une période de temps prédéfinie, commander le transistor de commutation à se déconnecter, de sorte que deux quelconques unités photovoltaïques connectées en série sont déconnectées et commander le circuit de puissance pour arrêter la conversion de puissance, ou limiter une tension de sortie du circuit de puissance pour être inférieure à une valeur de tension prédéfinie, ou limiter un courant de sortie du circuit de puissance pour être inférieur à une valeur de courant prédéfinie.

2. Convertisseur selon la revendication 1, dans lequel le dispositif de commande est en outre configuré pour : lorsque l'instruction de démarrage et l'instruction de battement de coeur sont reçues, commander le circuit de puissance pour récupérer une conversion de puissance, ou une limitation de libération sur la tension de sortie du circuit de puissance, ou une limitation de libération sur le courant de sortie du circuit de puissance.

3. Convertisseur selon la revendication 1, dans lequel lorsque le circuit de puissance est un circuit de conversion de courant continu-courant continu, le circuit de conversion de courant continu-courant continu est un circuit élévateur, un circuit abaisseur ou un circuit abaisseur-élévateur.

4. Convertisseur selon la revendication 3, comprenant en outre une unité de communication (307, 407), dans lequel
l'unité de communication est configurée pour : recevoir un signal de commande d'un niveau supérieur, et transmettre le signal de commande au dispositif de commande, dans lequel le signal de commande comprend l'instruction de battement de coeur, l'instruction de démarrage et l'instruction d'arrêt.

5. Convertisseur selon la revendication 4, comprenant en outre une alimentation électrique auxiliaire (308, 408), dans lequel
une extrémité d'entrée du convertisseur est connectée à l'alimentation électrique auxiliaire, de sorte que, lorsqu'une unité photovoltaïque des au moins deux unités photovoltaïques est connectée à l'extrémité d'entrée du convertisseur, l'unité photovoltaïque fournit de la puissance à l'alimentation électrique auxiliaire ; et
l'alimentation électrique auxiliaire fournit de la puissance au dispositif de commande et l'unité de communication.

6. Convertisseur selon l'une quelconque des revendications 1 à 5, dans lequel le transistor de commutation est l'un quelconque des éléments suivants : un transistor, un transistor bipolaire à grille isolée et un transistor à effet de champ à semiconducteur à oxyde métallique.

7. Procédé de commande d'un convertisseur (200, 300, 400, 800), dans lequel le convertisseur est appliqué à un système de génération de puissance photovoltaïque, le convertisseur comprend un dispositif de commande (202, 301, 401, 801), une pluralité de ports d'entrée, un circuit de puissance (201, 302, 402, 802), dans lequel le circuit de puissance est un circuit de conversion de courant continu-courant continu, un circuit de conversion de courant continu-courant alternatif, ou un circuit de commande de connexion, et au moins un transistor de commutation (203, 303, 403, 803), le convertisseur supporte l'accès d'au moins deux unités photovoltaïques par l'intermédiaire des ports d'entrée, les ports d'entrée sont agencés de telle sorte que les au moins deux unités photovoltaïques, lorsqu'elles sont connectées aux ports d'entrée, sont connectées en série à l'intérieur du convertisseur à l'aide du transistor de commutation ; et le procédé comprend :
(701) lorsqu'une instruction de démarrage est reçue et l'instruction de battement de coeur est reçue, la commande du transistor de commutation à se connecter.
(702) lorsqu'une instruction d'arrêt est reçue ou qu'une instruction de battement de coeur est perdue dans une période de temps prédéfinie, la commande du transistor de commutation à se déconnecter, de sorte que deux quelconques unités photovoltaïques connectées en série sont déconnectées et la commande du circuit de puissance pour arrêter la conversion de puissance, ou limiter une tension de sortie du circuit de puissance pour être inférieure à une valeur de tension prédéfinie, ou limiter un courant de sortie du circuit de puissance pour être inférieur à une valeur de courant prédéfinie.

8. Système de génération de puissance photovoltaïque, comprenant au moins deux unités photovoltaïques (804) et le convertisseur selon l'une quelconque des revendications 1 à 6, dans lequel
les au moins deux unités photovoltaïques sont connectées au convertisseur ; et
les au moins deux unités photovoltaïques sont connectées en série à l'intérieur du convertisseur à l'aide d'un transistor de commutation (203, 303, 403, 803), et l'unité photovoltaïque est formée soit d'un composant photovoltaïque unique soit d'une pluralité de composants photovoltaïques connectés en série et en parallèle.

9. Système selon la revendication 8, dans lequel, lorsque le circuit de puissance est un circuit de conversion de courant continu-courant continu (902) et qu'il y a une pluralité de circuits de conversion de courant continu-courant continu, la pluralité de circuits de conversion de courant continu-courant continu sont connectés en série pour former une chaîne de circuit de conversion de courant continu-courant continu (903, 904), et la chaîne de circuit de conversion de courant continu-courant continu est connectée à une extrémité d'entrée d'un onduleur (905) ; et
l'onduleur est configuré pour : convertir une sortie de courant continu par la chaîne de circuit de conversion de courant continu-courant continu en un courant alternatif, et délivrer le courant alternatif.

10. Système selon la revendication 9, dans lequel il y a une pluralité de chaînes de circuit de conversion de courant continu-courant continu ; et
la pluralité de chaînes de circuits de conversion de courant continu-courant continu sont connectées en parallèle à l'extrémité d'entrée de l'onduleur, ou sont connectées séparément à différents ports d'entrée de l'extrémité d'entrée de l'onduleur.
